# EUROPEAN PATENT APPLICATION

(11) **EP 1 462 274 A1**
(43) Date of publication of application: **29.09.2004**
(21) Application number: 03425196.7
(22) Date of filing: 28.03.2003
(51) Int. Cl.: B60B 1/04

(54) **Spoked wheel for a bicycle**

(71) Applicant: CAMPAGNOLO S.R.L., I-36100 Vicenza (IT)
(72) Inventor: Passarotto, Maurizio, 45100 Rovigo (IT)
(74) Representative: Checcacci, Giorgio

(57) **Abstract**

A spoked wheel for a bicycle is described herein, which comprises a hub (2), a rim (3) and a plurality of spokes that connect the hub (2) to the rim (3), in which said spokes comprise a first set of spokes arranged on one side of the wheel, made up of spokes connected to a first portion of the hub, and a second set of spokes arranged on the other side of the wheel, made up of spokes connected to a second portion of the hub, which is set at an axial distance from said first portion. The spokes of the first set are grouped together into couples set at angular distances apart from one another with the spokes of each couple that have their outer ends set close to one another.

## Description

The present invention relates to a spoked wheel for a bicycle, of the type which comprises a hub, a rim, and a plurality of spokes that connect the hub to the rim, in which said spokes comprise a first set of spokes arranged on one side of the wheel, made up of spokes connected to a first portion of the hub, and a second set of spokes arranged on the other side of the wheel, made up of spokes connected to a second portion of the hub which is set at an axial distance from said first portion.

Recent years have witnessed an increasing development of studies and researches aimed at identifying new configurations of spoked wheels for bicycles capable of leading to better performances of the wheel, as well as of creating an original and innovative aesthetic effect.

On a strictly technical plane, especially in the field of spoked wheels for road racing bicycles, the research has been aimed at identifying solutions that are optimal both from the point of view of weight reduction, which is increasingly emphasized in said sector, and from the point of view of the static and dynamic stability of the wheel, as well as from the standpoint of the structural strength and in particular of the reduction in the risks of failure of the spokes of the wheel.

In wheels of the above type, the spokes must provide a substantial contribution to the achievement of all the aforesaid aims. It is, in fact, the spokes that contribute to a large extent to maintaining a static and dynamic stability of the wheel in any condition of use of the bicycle. Further in rear wheels, the spokes are the elements responsible for performing the important function of transmitting the driving torque from the hub of the wheel, on which one or more sprockets are mounted which are engaged selectively by the drive chain of the bicycle, to the rim of the wheel. Said torque transmission must occur with the maximum possible efficiency, and hence with minimum deformations, in order not to dissipate the energy exerted on the pedals by the cyclist. Finally, such results must be achieved with the minimum weight possible and without, however, introducing risks of failure in the wheel spokes. From this standpoint, a particularly critical factor is the tensioning to which the spokes are subjected already at the moment of the wheel assembly. One of the purposes of said tensioning is to guarantee that the rim will always remain "centred", i.e., it will not shift away from a median plane of the wheel orthogonal to the axis of the hub and equidistant from the ends of the hub itself. For this purpose, the spokes of a typical spoked wheel include a first set of spokes on one side of the wheel, connected to a first portion of the hub, and a second set of spokes on the other side of the wheel, connected to a second portion of the hub, set at an axial distance from the first portion. Consequently, the spokes on the two sides of the wheel have an inclination or camber angle with respect to the median plane of the wheel, which causes the spokes stresses to give rise to components of force in the direction parallel to the axis of the wheel, which are used for keeping the rim in the centred condition on said plane in any condition of operation. Of course, this problem becomes critical in wheels where the spokes on the two sides of the wheel present different camber angles. This is typically the case of the rear wheel, where the wheel hub carries, at one end, the sprockets cassette, so that the spokes set on the side of the wheel bearing the sprockets cassette have inclinations that are considerably smaller than the inclination of the spokes on the other side. Obviously, said spokes with smaller inclination must be more tensioned than the spokes on the other side in order to guarantee the centred position of the rim, and said higher tensioning gives rise to a greater risk of failure of the individual spoke itself. The problem of a different camber angle of the spokes on the two sides of the wheel does not exist only for rear wheels. It exists in general in any wheel, either rear or front, the hub of which is partially occupied, for instance, by the disk of a disk brake.

The purpose of the present invention is to realize a wheel of the type indicated at the beginning of the present description, which will be able to overcome, in an optimal way, all the technical problems that have been discussed above.

A further purpose of the present invention is to realize a wheel of the above indicated type that will lead to an innovative and original aesthetic result, such as to give to the wheel itself an unmistakable aspect.

In order to achieve these and further purposes, the subject of the invention is a spoked wheel having the characteristics specified in the annexed Claim 1. Further advantageous characteristics of the spoked wheel according to the invention are specified in the dependent claims annexed hereto.

Tests carried out by the applicant on wheels made accordingly with the above specified characteristics have shown that said wheels offer optimal technical performances from every point of view. At the same time, as will clearly emerge from the annexed drawings, the invention gives to the wheel an innovative and original aesthetic appearance, which is altogether unmistakable as compared to the panorama of spoked wheels up to today realized.

Further characteristics and advantages of the invention will emerge from the following description with reference to the annexed drawings, which are provided purely by way of non-limiting example and in which:
Figure 1 illustrates a spoked wheel for a bicycle according to the prior art, viewed in the direction of the axis of the wheel;
Figure 2 illustrates a first embodiment of the wheel according to the invention, viewed in the direction of the axis of the wheel;
Figure 3 is a perspective view, at an enlarged scale, of a detail of the wheel illustrated in Figure 2;
Figure 4 illustrates a second embodiment of the wheel according to the invention, viewed in the direction of the axis of the wheel;
Figure 5 is a perspective view, at an enlarged scale, of a detail of the wheel of Figure 4;
Figure 6 is a theoretical view used for illustrating some advantages of the invention with respect to the prior art;
Figure 7 is a partial perspective view of a further variant of the wheel according to the invention; and
Figure 8 illustrates a further variant of the wheel according to the invention.

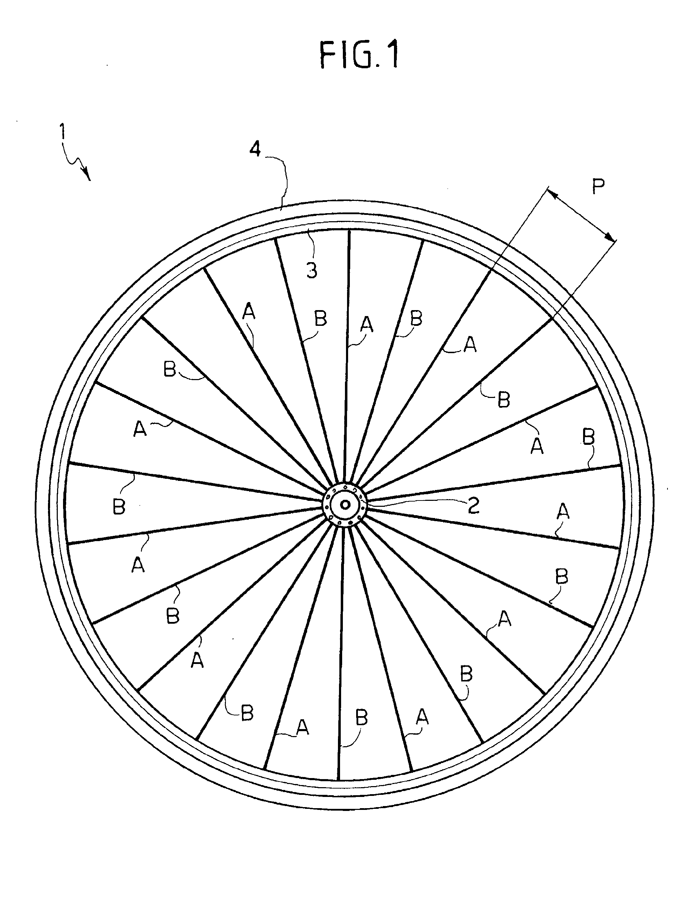

With reference to Figure 1, illustrated therein is a conventional bicycle wheel, designated as a whole by the reference number 1, which comprises a hub 2, a rim 3 on which is destined to be mounted a tyre 4, a plurality of spokes A belonging to a first set, which connect one side 2a of the hub 2 to the rim 3, and a plurality of spokes B belonging to a second set, which connect the other side 2b of the hub 2 to the rim 3, the spokes A of the first set being alternated with the spokes B of the second set. In said conventional wheel, the spokes are uniformly distributed along the rim, and the distance, or pitch, between two adjacent spokes, belonging to two different sets, is designated by P. It is evident that the pitch P depends upon the total number of spokes that form the wheel and that it is given by C/N, where C is the internal circumference of the rim and N is the total number of spokes of the wheel.

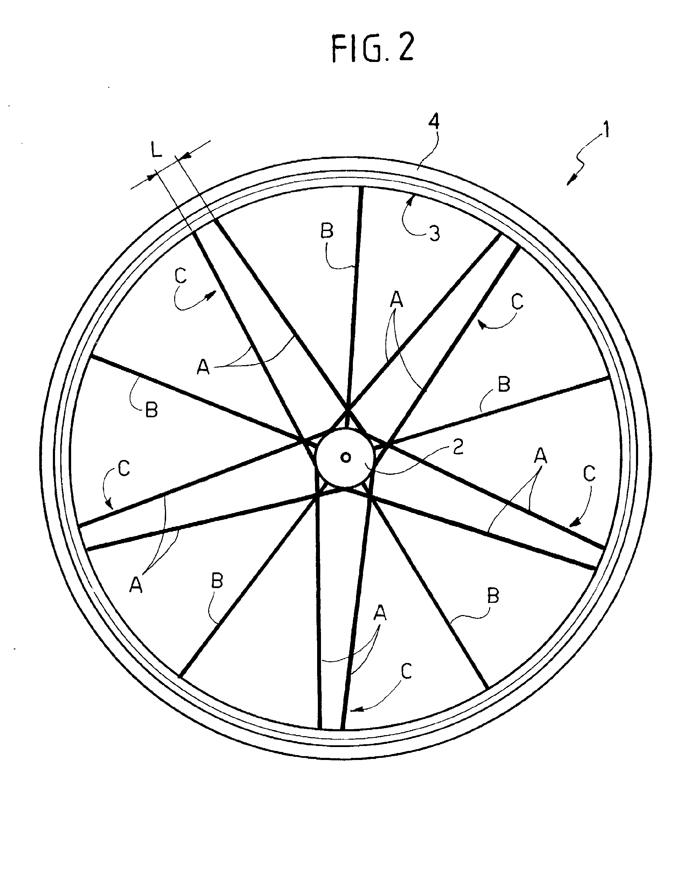

Figures 2 to 7 illustrate, instead, some embodiments of the wheel according to the invention, considering that other and different embodiments are possible, all of which are comprised within the scope of the present invention.

In said figures, the parts that are in common or correspond to those illustrated in Figure 1 are designated by the same reference numbers.

It should be noted, moreover, that the present description will not go into any detail of the structure and conformation of the hub 2 and of the rim 3, since these elements may be obtained in any known way and since the structure of said components, taken in itself, does not fall within the scope of the present invention. Likewise, not illustrated in detail is the way in which each spoke is connected, at one end, to the hub 2 and, at the other end, to the rim 3. Any already existing technique suitable for this purpose can be used. On the other hand, the elimination of said constructional details from the drawings makes the latter easier and faster to understand.

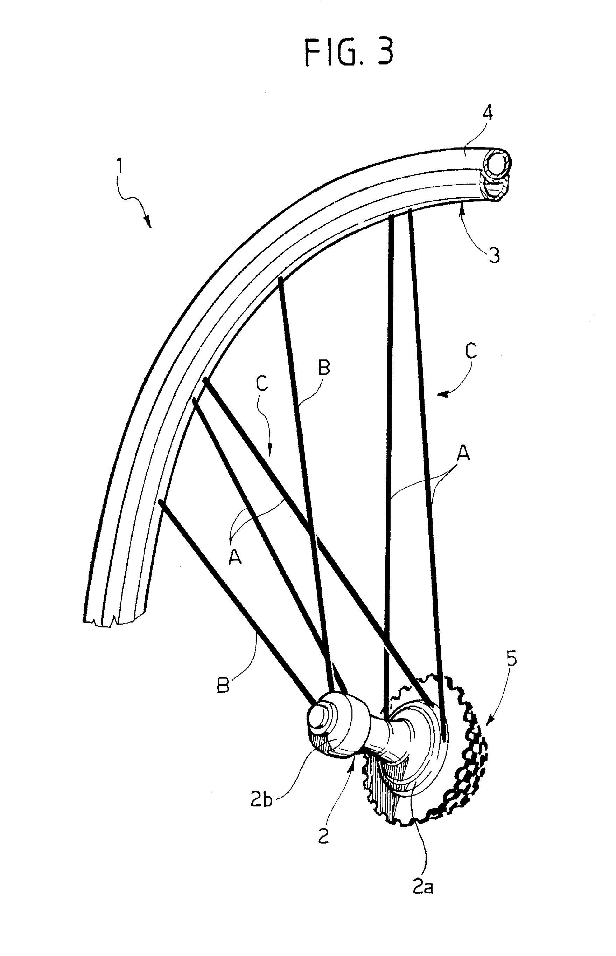

Figures 2 and 3 refer to an application of the invention to a rear bicycle wheel, in which a sprockets cassette 5 is associated to the hub 2, said cassette being made up of a plurality of sprockets designed to engage selectively the drive chain of the bicycle in a way per se known.

The spokes that join the hub to the rim of the wheel according to the invention are arranged in a first and a second set, on the two opposite sides of the wheel. The spokes of the first set, designated by A, are connected to one end 2a of the hub 2 adjacent to the sprockets cassette 5, whilst the spokes of the second set, designated by B, are connected to a portion 2b of the hub 2, set at an axial distance from the end 2a.

In all the embodiments of the wheel according to the invention, at least the spokes A of the first set are grouped together into a plurality of couples C, which, in the example illustrated, are set at an equal distance one from the other. Figure 2 shows five couples C of spokes A, but the number of said couples C may vary widely, for instance between a minimum of four couples and a maximum of fourteen couples.

By "couple of spokes C" is meant that, contrary to the traditional wheel of Figure 1, between two spokes which belong to the same set, in the specific case between two spokes A, there are not interposed spokes which belong to the other set, in this case spokes B. In addition, preferably, the spokes of each couple C are also brought close together; i.e., the distance L between the outer ends of the two spokes A of each couple C, or between the points of attachment to the rim 3, is smaller than the pitch P of a conventional wheel having the same total number of spokes, where P is given by C/N, C being the internal circumference of the rim and N being the total number of spokes of the wheel. In a preferred solution, the distance L between the two spokes A of the couple C is equal to or less than 60% of said pitch P. In another preferred solution, the distance L is equal to or less than 40% of said pitch P, and in a particularly preferred solution, said distance is equal to or less than 25% of said pitch P.

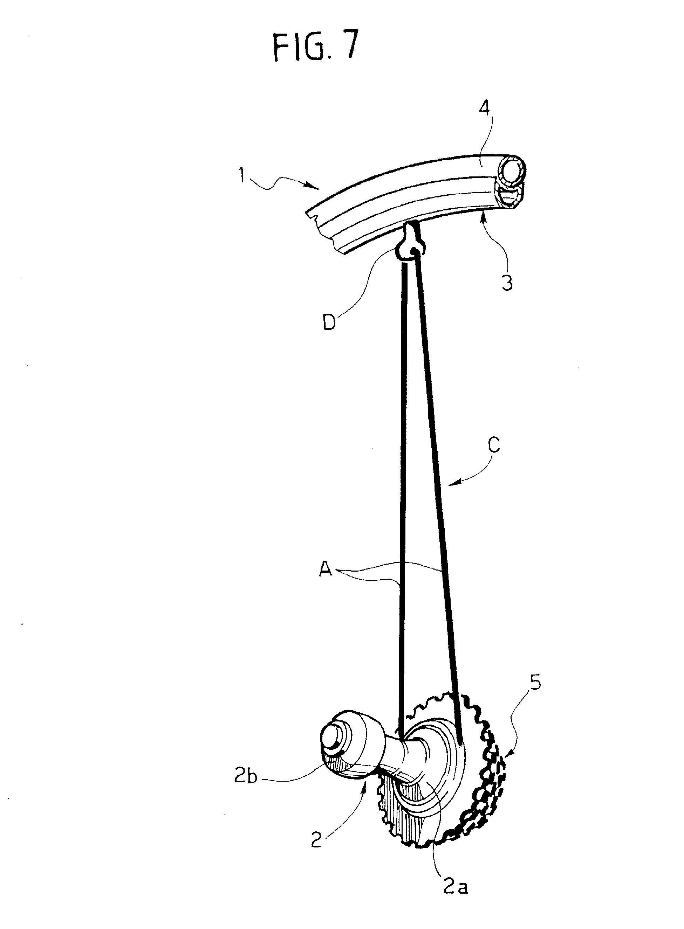

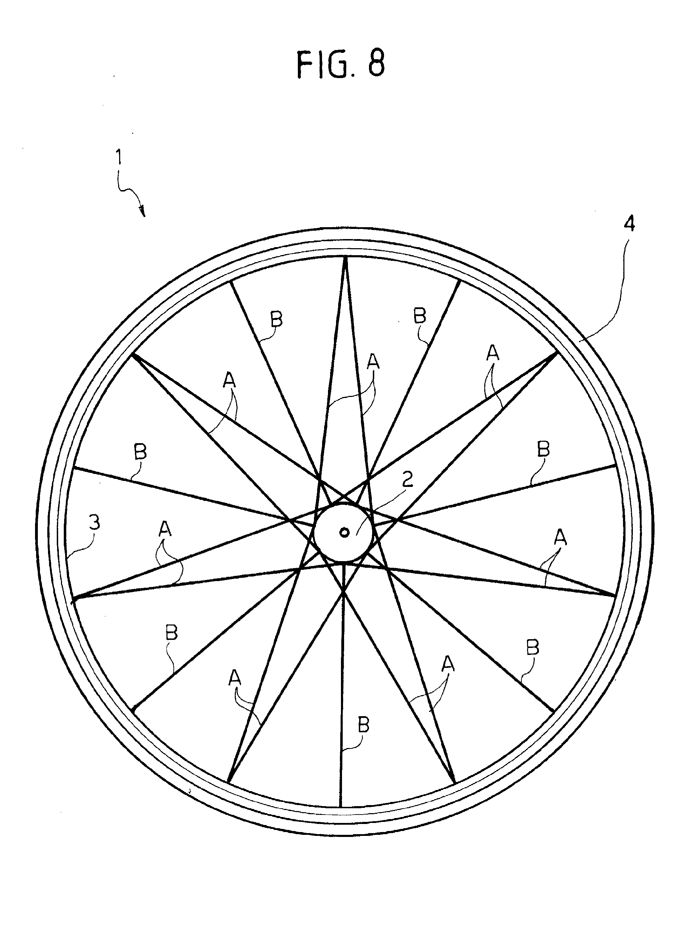

In another solution, illustrated in Figure 8, for a rim with a sufficient width, the two spokes A of the couple C may be connected to the rim substantially on the same axis, by reducing the distance L between the two spokes A of the couple C substantially to zero. Finally, as illustrated in Figure 7, the two spokes A of each couple C may converge in the same point of the rim, through a common element D provided with connection means that make it possible to set the two spokes A simultaneously in tension.

Thanks to the coupling of the two spokes A, each couple C of spokes A becomes structurally equivalent to a single spoke of large cross section, without, however, any weight increase. The technical effect is further improved with the close coupling of the two spokes.

In particular, the distance L between the two spokes of the couple C is chosen so as to cause the tensile stress and the compressive stress (meant as reduction of the initial assembly tensile stress), transmitted simultaneously from the hub of the rear wheel (when the cyclist exerts force on the pedals) respectively to the two spokes of each couple C, generates locally, on the portion of the rim to which the spokes are connected, a much smaller moment than the one that would be generated with a traditional spoking and, namely, almost negligible, with a consequent low stressing of the rim itself.

In the example illustrated, the two spokes A of each couple C start from two diametrically opposite points of the hub and converge with respect to one another towards the rim, according to two directions tangential to the axis of the hub, until they reach a distance apart at their outer ends that is smaller than the diameter of the hub and is considerably smaller than the distance between adjacent couples C.

Once again in the case of the preferred embodiment illustrated in Figures 2 and 3, the second set of spokes B comprises single radial spokes alternated with the couples C of the spokes A. In the preferred case, also the spokes B are set at an equal distance apart, and each of them is in a position equidistant between two adjacent couples C.

The aforesaid arrangement is suited particularly to a rear wheel. In the preferred case, the number of couples C of spokes A is equal to the number of spokes B, so that the rear wheel has a number of spokes on the side of the spokes A, i.e., the side of the wheel on which the sprockets are arranged, that is twice the number of spokes B on the opposite side.

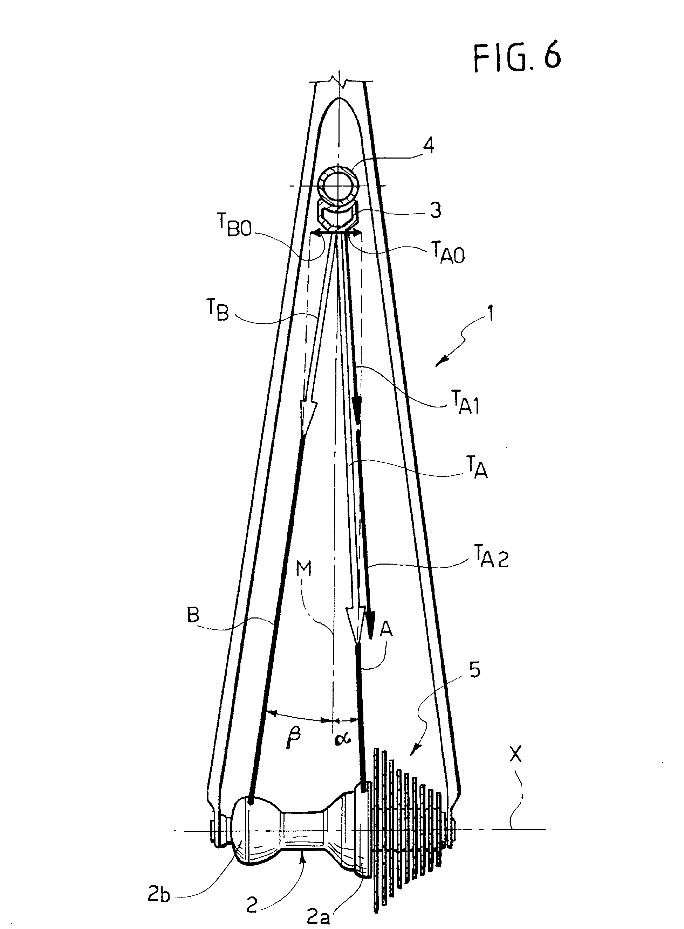

Said arrangement leads to important advantages from the point of view of the structural strength of the wheel and in particular of the resistance to failure of the spokes, for the reasons that are illustrated in what follows with reference to Figure 6. Said figure is a theoretical view, corresponding to a view in a plane containing the axis of the wheel, which illustrates also the fork of the bicycle frame on which the wheel is mounted. The view of Figure 6 is a theoretical view, since it shows a spoke B on the lefthand side of the wheel and a couple of spokes A (only one of which can be seen) on the right-hand side of the wheel, as if said spokes were in a common plane, whereas in reality, as said, they are in different planes.

For a rear wheel, as it is evident in Figure 6, the presence of the sprockets cassette 5 at one end of the hub 2 means that the spokes A set on said side of the wheel will have an inclination α with respect to the median plane M of the wheel that is considerably smaller than the inclination β of the spokes B set on the other side. The median plane M is defined as the plane orthogonal to the axis X of the hub that is equidistant from the ends of the hub.

As it is known, each spoke of the spoked wheel is mounted and applied with a given tensile force. In Figure 6, T_{A} and T_{B} designate the components of the tensile forces applied to two spokes set on the opposite sides of the wheel, in the plane of the figure. The components of the two forces T_{A}, T_{B} in a direction parallel to the axis X of the wheel are designated by T_{AO} and T_{BO} in Figure 6.

In the conventional wheels, which have an equal number of spokes on the two sides of the wheel, in order for the components T_{AO} and T_{BO} to be balanced with one another, so as to keep the rim 3 in the plane M, it is necessary for the tensile force T_{A} to be much higher than the tensile force T_{B} on account of its smaller inclination. To be precise, the ratio between the tensile force T_{A} and the tensile force T_{B} (of course always considering the tensile forces in the plane of Figure 6) must be substantially equal to and opposite to the ratio of the sines of the angles of inclination α and β. Said condition applies, in the conventional wheel, to each couple of spokes belonging to two different sides of the wheel and also applies, as a whole, with reference to the total tensile forces of the spokes set on one side and on the other side of the wheel. It follows that, in the conventional wheels, the tensioning of the spokes on the sprockets side is very high, with a consequent high risk of failure.

In view of what has been said above, it results evident that the spokes arrangement according to the invention leads to important advantages. First of all, since the number of spokes A is twice the number of spokes B, the tensile force T_{A} of each spoke A is substantially smaller than what would be necessary in the case of a conventional wheel. In particular, in the case of the invention, for each spoke B two spokes A exist, so that to each tensile force T_{B} a tensile force T_{A} corresponds, that is the sum of two tensile forces T_{A1} + T_{A2} which the two spokes A of each couple apply as a whole to the rim 3. T_{A1} and T_{A2} are in general equal to one another, but could also be different.

Furthermore, it is important to note that, in the case of a typical rear wheel, the ratio between the sine of β and the sine of α is approximately of 2:1, which means that in the balanced condition of the rim, each spoke A may be tensioned with a tensile force that substantially approaches that of the spoke B. In other words, thanks to the invention, when the components of the tensile forces of the spokes in radial planes containing the axis of the wheel are considered, all the spokes come to have tensile forces that are very close to one another, even equal.

Of course, the balance condition of the tensile forces of the spokes in the direction of the axis of the wheel applies, in the wheel according to the invention, also as a whole, with reference to the sums of the tensile forces of the spokes on the two sides of the wheel.

A further important advantage of the embodiment of Figures 2 and 3 is that all the advantages in terms of greater strength and resistance of the spokes, lower tensioning of the spokes on the sprocket side and lower risk of failure of the spokes themselves are obtained without weight increase and above all with a relatively uniform distribution of the points of spokes anchoring on the rim, which provides optimal guarantees from the point of view of the geometrical stability of the circular shape of the rim itself.

In addition to offering the particular advantages above discussed in the case of a wheel which has a different number of spokes between the two camber angles, the invention is particularly advantageous also for a wheel which has an equal number of spokes for both of the camber angles (typically a front wheel, even though it is not altogether excluded that the provision of an equal number of spokes for both of the camber angles may be used also for a rear wheel).

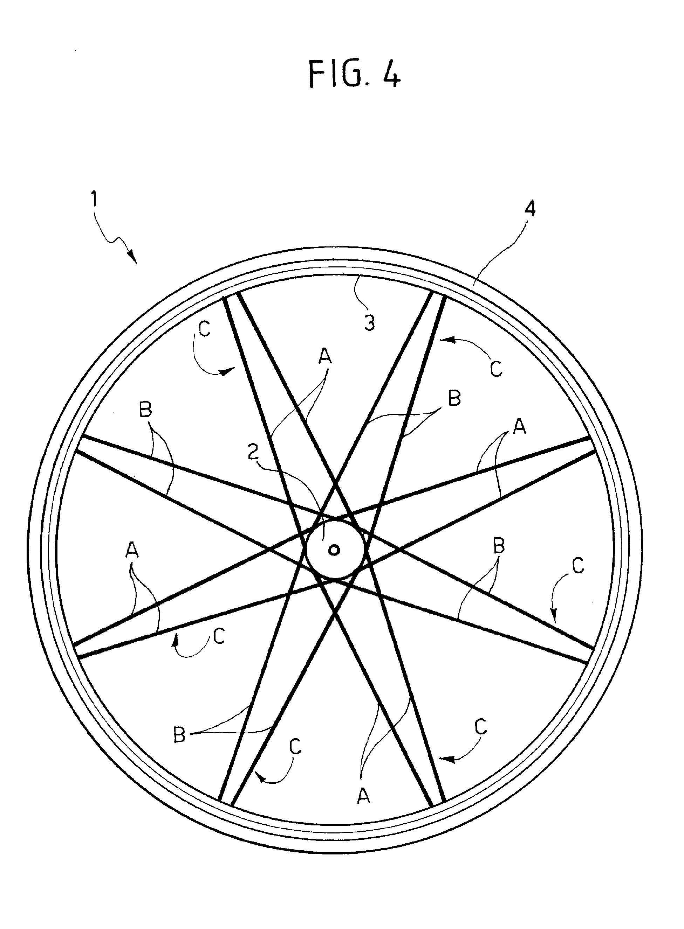

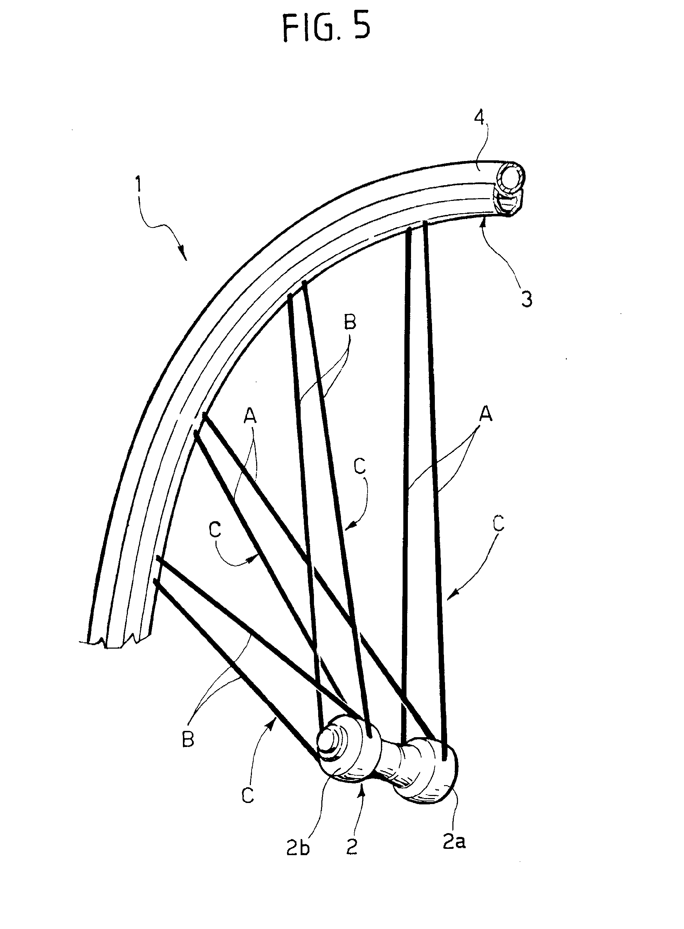

An example of embodiment of said wheel is illustrated in Figures 4 and 5.

In the case of the embodiment of Figures 4 and 5, also the spokes B of the second set are grouped into couples, which are arranged at equal distances apart from one another and alternated angularly between the couples of spokes A. With said arrangement, the spokes on the two sides of the wheel are equal in number.

It results evident from the foregoing description and from the annexed drawings, all the possible configurations of spokes conceivable on the basis of the teachings of the present invention give to the wheel, whether it is a front or a rear wheel, when it is viewed in the direction of its axis, an innovative, original and altogether unmistakable aesthetic appearance. Said advantage is added to the multiple advantages already described above in relation to the technical characteristics of the wheel according to the invention.

Without prejudice to the principle of the invention, the details of construction and embodiments may vary widely with respect to what is described and illustrated herein, without thereby departing from the scope of the present invention, as defined in the annexed claims.

For instance, it is possible to arrange both the spokes A and the spokes B in couples on both sides of the wheel, with the couples on the two sides having the same angular positions, so that in each area of the rim of spokes attachment two couples of spokes belonging, respectively, to the two sides of the wheel converge. It is also possible that on one or both sides of the wheel, couples of spokes alternating with single spokes, which are also set on the same side, are provided.

## Claims

1. A spoked wheel for a bicycle comprising a rim (3), a hub (2), which has a first anchoring portion (2a) and a second anchoring portion (2b) for anchoring spokes, and a plurality of spokes, which connect the hub (2) to the rim (3), in which a first set of spokes (A) is connected to the first anchoring portion (2a) and a second set of spokes (B) is connected to the second anchoring portion (2b) of the hub (2), said wheel being **characterized in that** at least two spokes (A) of at least one of the two sets of spokes (A, B) are grouped together so as to form a couple (C) in which no spoke of the other set is interposed.

2. The wheel according to Claim 1, **characterized in that** the points of attachment to the rim (3) of the couple (C) of spokes (A) are close to one another.

3. The wheel according to Claim 2, **characterized in that** the points of attachment to the rim (3) of the couple (C) of spokes (A) present a distance (L) equal to or less than 60% of the pitch (P) of a conventional wheel having the same total number of spokes.

4. The wheel according to Claim 2, **characterized in that** the points of attachment to the rim (3) of the couple (C) of spokes (A) present a distance (L) equal to or less than 40% of the pitch (P) of a conventional wheel having the same total number of spokes.

5. The wheel according to Claim 2, **characterized in that** the points of attachment to the rim (3) of the couple (C) of spokes (A) present a distance (L) equal to or less than 25% of the pitch (P) of a conventional wheel having the same total number of spokes.

6. The wheel according to Claim 2, **characterized in that** the points of attachment to the rim (3) of the couple (C) of spokes (A) present a distance (L) approaching zero.

7. The wheel according to Claim 6, **characterized in that** the points of attachment to the rim (3) of the couple (C) of spokes (A) coincide in a single point of attachment to the rim (3).

8. The wheel according to Claims 1 and 2, **characterized in that** all the spokes belonging to said set of spokes (A) are grouped together in couples (C) set at angular distances apart from one another.

9. The spoked wheel according to one of the previous claims, **characterized in that** at least two spokes of the second set of spokes (B) are grouped together into couples (C).

10. The wheel according to Claim 9, **characterized in that** the points of attachment to the rim (3) of the couple (C) of spokes (B) are close to one another.

11. The wheel according to Claims 9 and 10, **characterized in that** all the spokes belonging to said second set of spokes (B) are grouped together into couples (C) set at angular distances apart from one another.

12. The spoked wheel according to Claim 11, **characterized in that** the couples (C) of spokes (B) of the second set are alternated at angular distances with the couples (C) of spokes (A) of the first set.

13. The spoked wheel according to Claim 11, **characterized in that** the couples (C) of spokes (B) of the second set are in angular positions which substantially coincide with those of the couples (C) of spokes (A) of the first set.

14. The spoked wheel according to Claim 1 or 9, **characterized in that** each couple (C) of spokes (A; B) is made up of two spokes set according to two tangential directions with respect to the axis of the wheel.

15. The spoked wheel according to Claim 14, **characterized in that** the two aforesaid tangential directions converge outwards.

16. The spoked wheel according to Claim 1 or 9, **characterized in that** the points of attachment to the rim (3) of the couple (C) of spokes (A) present a distance (L) smaller than the maximum diameter of the hub (2) of the wheel.

17. The wheel according to Claim 1, **characterized in that** the number of spokes of the first set (A) is greater than the number of spokes of the second set (B).

18. The wheel according to Claim 17, **characterized in that** the number of spokes of the first set (A) is twice the number of spokes of the second set (B) .

19. The wheel according to Claim 18, **characterized in that** the spokes (B) of the second set are single spokes.

20. The wheel according to Claim 19, **characterized in that** the single spokes (B) of the second set are angularly interposed to the couples (C) of spokes (A) of the first set.

21. The spoked wheel according to Claim 19, **characterized in that** the spokes (B) of the second set are radially directed spokes, if viewed in the direction of the axis of the wheel.

22. The spoked wheel according to any one of the previous claims, **characterized in that** the tensions of the spokes (A) of the first set and the tensions of the spokes (B) of the second set are as a whole substantially balanced with respect to one another in the direction of the axis of the wheel.

23. The spoked wheel according to Claim 1, **characterized in that** the spokes of the first set (A) present an inclination (α) with respect to a median plane (M) of the wheel smaller than the inclination (β) of the spokes (B) of the second set with respect to said median plane (M).

24. The spoked wheel according to Claim 23, **characterized in that** the sum of the tensile forces of the spokes (A) of the first set, in respective radial planes containing the axis of the wheel, and the sum of the tensile forces of the spokes (B) of the second set, in respective radial planes containing the axis of the wheel, are in a ratio to one another equal to the inverse ratio (sinβ/sinα) between the sines of the respective angles of inclination (α, β).

25. The spoked wheel according to any one of the previous claims, **characterized in that** the couples (C) of spokes (A) of the first set are arranged at equal distances apart.

26. The spoked wheel according to Claim 25, **characterized in that** the couples (C) of spokes (B) of the second set are arranged at equal distances apart.

27. The spoked wheel according to Claim 26, **characterized in that** each couple (C) of spokes (B) of the second set is arranged in a position equidistant between two adjacent couples (C) of spokes (A) of the first set.

28. The spoked wheel according to Claim 25, **characterized in that** the single spokes (B) of the second set are arranged at equal distances apart.

29. The spoked wheel according to Claim 28, **characterized in that** each spoke (B) of the second set is arranged in a position equidistant between two adjacent couples (C) of spokes (A) of the first set.

30. The spoked wheel according to Claim 29, **characterized in that** it is a rear wheel.

31. The spoked wheel according to Claim 8, **characterized in that** the side of the wheel with twice the number of spokes is the one corresponding to one end of the hub which carries a sprockets cassette (5).

32. The spoked wheel according to Claim 12, **characterized in that** it comprises an identical number of couples of spokes of the first set and of the second set.

33. The spoked wheel according to Claim 12, **characterized in that** it is a front wheel.

34. The spoked wheel according to Claim 8, **characterized in that** the number of couples of spokes of the first set is comprised between 4 and 14, the two extremes being included.

35. The spoked wheel according to Claim 11, **characterized in that** the number of couples of spokes of the second set is comprised between 4 and 14, the two extremes being included.

36. The spoked wheel according to Claim 19, **characterized in that** the number of single spokes of the second set is comprised between 4 and 14, the two extremes being included.

37. The spoked bicycle wheel according to Claim 7, **characterized in that** the two spokes (A) of each couple (C) converge until they are joined together with a common connection element (D) to the rim.

38. The spoked wheel according to Claim 37, **characterized in that** said common connection element is provided with connection means to the rim that make it possible to set in tension simultaneously the two spokes of said couple.
